# EUROPÄISCHE PATENTSCHRIFT

(11) **EP 1 048 227 B1**
(45) Veröffentlichungstag und Bekanntmachung des Hinweises auf die Patenterteilung: **02.01.2002**
(21) Anmeldenummer: 00810059.6
(22) Anmeldetag: 24.01.2000
(51) Int. Cl.: A23L 1/314, A23L 1/317, A23L 1/318

(54) **Fleischprodukte mit omega-3-Fettsäure und Vitamin**
Meat products with omega-3-fatty acids and vitamins
Produits carnes avec des acides gras oméga 3 et des vitamines

(30) Priorität: 29.04.1999 CH 78799
(43) Veröffentlichungstag der Anmeldung: 02.11.2000
(73) Patentinhaber: European FoodTec GmbH, 4052 Basel (CH)
(72) Erfinder: Rimböck, Johann, 4055 Basel (CH)
(74) Vertreter: Zimmermann, Hans, Dr.

(56) Entgegenhaltungen:
- EP-A- 0 659 347
- DE-A- 19 703 252
- PATENT ABSTRACTS OF JAPAN vol. 095, no. 001, 28. Februar 1995 (1995-02-28) & JP 06 292534 A (KANAGAWA KAGAKU KENKYUSHO:KK;OTHERS: 01), 21. Oktober 1994 (1994-10-21)
- PATENT ABSTRACTS OF JAPAN vol. 096, no. 012, 26. Dezember 1996 (1996-12-26) & JP 08 196237 A (ASAHI CHEM IND CO LTD), 6. August 1996 (1996-08-06)
- KILGORE L T ET AL: "Fortification of hamburger with calcium, vitamin A, and ascorbic acid." JOURNAL OF THE AMERICAN DIETETIC ASSOCIATION, Bd. 71, Nr. 2, 1977, Seiten 135-139, XP002113273 Dep. of Home Economics, Mississippi St. Univ., Mississippi, USA
- BUCKENHUESKES H J: "Functions of sugars in meat processing." FLEISCHWIRTSCHAFT, XP002113274 12) 1271-1275 1998 Gewuerzmueller GmbH, Klagenfurter Str. 1-3, D-70469 Stuttgart, Germany
- K. SCHMIDT: "Omega-3-Fettsaüren" VITAMINSPUR, Nr. 13, 1998, Seite 58-64 XP002113275

## Beschreibung

### GEBIET DER ERFINDUNG

Die vorliegende Erfindung betrifft Fleischprodukte, die ausgehend von Fleisch hergestellt sind.

### HINTERGRUND DER ERFINDUNG

Zu den Wohlstandskrankheiten im mitteleuropäischen Raum gehören Krankheiten, die mit einer zu fetten Ernährung einhergehen. Diese Krankheiten sind beispielsweise Krankheiten des Blutkreislaufs, wie die Verengung der Blutgefässe durch Fettablagerungen, Herzinfarkte, Schlaganfälle u.ä.

Es wurde bereits früh festgestellt, dass in manchen Völkern wie den Eskimos diese Krankheiten nahezu unbekannt sind, obwohl diese Völker sich ebenfalls relativ fettreich ernähren. Die Fette stammen jedoch von Fischen oder anderen Meerestieren ab, im Unterschied zu Mitteleuropa, wo die Fette in der Nahrung in erster Linie tierischer oder pflanzlicher Herkunft sind.

Es wurde gefunden, dass es die mehrfach ungesättigten Fettsäuren, darunter insbesondere die omega-3-Fettsäuren, in marinen Fetten sind, die das Auftreten der Kreislaufkrankheiten verhindern helfen. Der medizinische Wert der omega3-Fettsäure wurde in den letzten 10 Jahren intensiv untersucht (siehe z.B. den Übersichtsartikel von SCHMID in Vitaminspur **1998**, 13, 58-64).

Als vorbeugende Massnahme wird beispielsweise empfohlen, Nahrungsmittel zu verzehren, die reich an diesen Fettsäuren sind, also Fische und aus Meerestieren gewonnene Extrakte wie Lebertran.

Im Zuge der Wertverbesserung von Nahrungsmittel allgemein (insbesondere hinsichtlich des Vitamingehalts) werden einzelne Lebensmittel (insbesondere Milchprodukte) mit Zusätzen versehen, die aus anderen Nahrungsmitteln stammen. Solche Lebensmittel sind unter dem Begriff "functional foods" bekannt. Im oben zitierten Uebersichtsartikel wird der Einsatz von omega-3-Fettsäure in Fruchtsäften und in "funktionalen" Getränken erwähnt.

### STAND DER TECHNIK

In der EP-A-0 659 347 wird eine stabile, emulgierte Zusammensetzung beschrieben, die DHA (all-cis-Docosa-4,7,10,13,16,19-hexaensäure), EPA (all-cis-Eicosa-5,8,11,14,17-pentaensäure) oder beide enthält und die zu verschiedenen Fleischprodukten zugegegeben werden kann.

In der JP-A-06-292534 werden Fleischprodukte beschrieben, denen 0,01 bis 3,0 % DHA zugegeben wird.

In der JP-A-08-196237 werden verarbeitete Fleischprodukte beschrieben, denen u.a. ein DHA-haltiges Lipid, das beispielsweise vom Thunfisch stammen kann, sowie Pektin zugegeben wird.

Kilgore et al. (Journal of the American Dietetic Association 1977, **71/2**, 135-139) beschreiben die Veredelung von Hackfleisch durch Zugabe von Vitamin A und Vitamin C. Im Hinblick auf Fütterungsversuche an Ratten wurden aus diesem Hackfleisch Plätzchen gebraten, denen als Quelle ungesättigter Fettsäuren für die Ratten Mayonnaise zugegeben wurde.

Aufgabe der vorliegenden Erfindung ist es, ein Lebensmittel bereitzustellen, das auch für traditionell oder konservativ denkenden oder der "gesunden" Kost nicht zugeneigten Konsumenten akzeptabel ist und das für eine ausgewogene Ernährung von Bedeutung ist.

### ZUSAMMENFASSUNG DER ERFINDUNG

Die Aufgabe wird durch Fleischprodukte gemäß Anspruch 1 gelöst.

### GENAUE BESCHREIBUNG DER ERFINDUNG

Als "Fleischprodukte" gelten im Rahmen der vorliegenden Anmeldung Lebensmittel, die unter Verwendung von mindestens 20 Massenprozenten Fleisch hergestellt sind und die neben allfälliger. Kältebehandlung allfälligem Zerkleinern (Zerlegen, Schnezeln, Hacken), allfälligem Verpacken und einer allfälligen Anwendung von Verarbeitungshilfstoffen bei der Gewinnung mindestens einem von diesen verschiedenen Behandlungsschritt unterzogen wurden und die in ihrer Eigenart vom Fleischanteil bestimmt sind.

Diese Definition für Fleischerzeugnisse ist gemäss der Definition von Artikel 119 in Kombination mit Artikel 118 Absatz 2 der Schweizerischen Lebensmittelverordnung vom 1. März 1995, Stand der Änderungen vom 26. Januar 1999. Ähnliche Definitionen existieren auch in Lebensmittelverordnungen anderer Staaten und der Europäischen Union.

Es versteht sich von selbst, dass die omega-3-Fettsäure(n) und die Vitamine nicht als "Verarbeitungshilfsstoffe" im Sinne der obigen Definition anzusehen sind.

Die für die erfindungsgemässen Fleischprodukte geeigneten Fleischarten stammen vorzugsweise ab von den zoologischen Familien der Bovidae (Hornträger, z.B. dem Rind), der Cervidae (Hirsche), der Suidae (Schweine); vom Hausgeflügel, also beispielsweise dem Huhn, dem Truthuhn, dem Perlhuhn, der Gans, der Ente, der Taube und der Zuchtwachtel; vom Hauskaninchen; vom pflanzenfressenden Wild; von Fischen; Krebstieren; Weichtieren und den Stachelhäutern.

Die Obergrenze des messbaren Anteils an Fleisch in den erfindungsgemässen Fleischprodukten kann bei bis zu 99 Gewichtsprozenten liegen. Bei erfindungsgemässen Wurstwaren oder Aufschnitten o.ä., wo Zusätze einen erheblichen Massenanteil ausmachen, liegt der Anteil Fleisch typisch bei etwa 30 bis 60 Gewichtsprozenten.

Der Begriff "omega-3-Fettsäure" ist in der Ernährungsphysiologie bekannt, z.B. aus dem oben erwähnten Übersichtsartikel. Es handelt sich um Fettsäuren mit unverzweigtem Kohlenwasserstoffrest, die in 3-Stellung und in 9-Stellung (jeweils ausgehend vom Methylende des Kohlenwasserstoffrestes) je eine Doppelbindung aufweisen. Der Begriff "Fettsäure" soll im Rahmen der vorliegenden Anmeldung die freie Fettsäure oder einen essbaren Ester dieser Fettsäure mit einem nichttoxischen Alkohol, Glykol oder Polyol bedeuten. Beispiele für solche Alkohole, Glykole oder Polyole sind insbesondere Glycerin und Kohlehydrate wie z.B. Glucose.

Erfindungsgemäss bevorzugt sind Kettenlängen des Kohlenwasserstoffrestes der omega-3-Fettsäure von 11 bis 25 Kohlenstoffatomen, darunter insbesondere Kohlenwasserstoffreste mit einer ungeraden Anzahl Kohlenstoffatomen; bei diesen Angaben ist das Carboxy-Kohlenstoffatom der Fettsäure nicht mitgezählt.

Zusätzlich zu den beiden obigen Doppelbindungen können noch weitere Doppelbindungen im Kohlenwasserstoffrest vorhanden sein. Bevorzugt sind die beiden Doppelbindungen in 3- und 9-Stellung ausgehend vom Methylende in cis-Konfiguration und besonders bevorzugt sind alle vorhandenen Doppelbindungen in cis-Konfiguration.

Erfindungsgemäss besonders bevorzugte Beispiele für omega-3-Fettsäuren sind die all-cis-Octadeca-9,12,15-triensäure, die all-cis-Eicosa-5,8,11,14,17-pentaensäure (im Folgenden mit EPA abgekürzt) und die all-cis-Docosa-4,7,10,13,16,19-hexaensäure (im Folgenden mit DHA bezeichnet), wobei hier die Numerierung der Doppelbindungspositionen in der in der Chemie üblichen Weise vom Carboxy-Kohlenstoff ausgeht.

In den erfindungsgemässen Fleischprodukten können auch mehrere omega-3-Fettsäuren gleichzeitig als Zusätze enthalten sein. Bevorzugt enthalten die erfindungsgemässen Fleischwaren die omega-3-Fettsäuren in Form eines natürlichen oder naturnahen Öls oder Fetts, das reich an solchen Fettsäuren ist. Beispiele für solche Öle und Fette sind in erster Linie marine Öle wie Fischöle und Lebertran. Diese Öle weisen oft den Nachteil des fischartigen Geruchs auf. Es sind jedoch teilweise auch solche Öle im Handel erhältlich, raffiniert sind unds die diesen Geruch nicht oder fast nicht mehr aufweisen. Ein Beispiel hierfür ist das von der Firma Roche (Basel, Schweiz) vertriebene Öl "ROPOFA '30' n-3", mit einem Gehalt an DHA von etwa 17 Gewichtsprozenten und einem Gehalt an EPA von etwa 12 Gewichtsprozenten. Dieses Öl ist zusätzlich gegen Oxidation der omega-3-Fettsäure stabilisiert (siehe unten).

Da in rohem Fleisch normalerweise keine nennenswerten Anteile von omega-3-Fettsäuren vorkommen, stammt der in den erfindungsgemässen Fleischprodukten nachweisbare Gesamtgehalt ausschliesslich von der beim Herstellungsprozess zugegebenen Menge ab. Andernfalls kann durch Bestimmung der Art und Menge des verwendeten Fleisches und des darin enthaltenen typischen Gehalts an omega-3-Fettsäuren ein theoretischer Gehalt an diesen Säuren im Fleischprodukt berechnet werden (wahlweise unter Berücksichtigung der beim Herstellungsprozess zu erwartenden Verluste) und der zusätzliche Gehalt als Differenz gegenüber dem tatsächlich in dem Fleischprodukt gemessenen Gesamtgehalt bestimmt werden. Der vom Fleisch selber beigesteuerte Gehalt kann auch aus einem Fleischprodukt bestimmt werden, das bis auf die Zugabe der omega-3-Fettsäuren gleich wie ein erfindungsgemässes Fleischprodukt hergestellt wurde (d.h. aus einem Kontroll- oder Blindversuch).

Die erfindungsgemäss einsetzbare zusätzliche Menge an omega-3-Fettsäure (die den erhöhten Gehalt im Fleischprodukt bewirkt) ist nicht kritisch, da allfällige Überschüsse an diesen Fettsäuren durch den Körper ausgeschieden werden, ohne toxische Wirkungen zu erzeugen. Die zusätzliche Menge kann beispielsweise 0,1 bis etwa 5 Gewichtsprozente, bevorzugt etwa 0,1 bis etwa 2 Gewichtsprozente des fertigen Fleischproduktes betragen. Bevorzugt ist der Gesamtgehalt an omega-3-Fettsäure so bemessen, dass beim Verzehr einer Portion des Fleischproduktes (typisch etwa 100 g) gerade die empfohlene Tagesdosis von etwa 200 bis 400 mg (abhängig von Alter, Geschlecht und Körpergewicht) aufgenommen wird.

Da die Zugabe der omega-3-Fettsäure beim Herstellungsprozess des Fleischproduktes erfolgt, ist der erfindungsgemässe zusätzliche Gehalt an dieser Fettsäure im Fleischprodukt in erster Linie extrazellulär vorhanden.

Die omega-3-Fettsäuren sind empfindlich gegen Oxidation durch Luftsauerstoff. Vorzugsweise enthalten die erfindungsgemässen Fleischwaren daher zusätzlich noch ein lebensmittelrechtlich zugelassenes Antioxidans. Beispiele für solche Antioxidantien sind die Tocopherole, Butylhydroxytoluol (BHT), und Derivate der Ascorbinsäure, insbesondere die Ester der Ascorbinsäure wie das Ascorbinsäurepalmitat. Diese Antioxidantien können alleine oder in Kombination eingesetzt werden. Die Menge des oder der Antioxidantien beträgt vorzugsweise etwa 0,1 bis etwa 2 Gewichtsprozent, besonders bevorzugt etwa 1 Gewichtsprozent, bezogen auf die omega-3-Fettsäure(n).

Im Sinne einer ausgewogenen Ernährungsbilanz werden den erfindungsgemässen Fleischprodukten neben den omega-3-Fettsäuren eines oder mehrere lebensmittelrechtlich zugelassene Vitamine zugegeben. Diese Vitamine werden vorteilhaft in Mengen zugegeben, dass das Fleischprodukt eine ausgewogene Ernährungsbilanz aufweist. Bei den Vitaminen handelt es sich um lebensmittelrechtlich zugelassene Vitamine wie etwa Vitamin E, Vitamin C, Vitamin B₁, Vitamin B₂, Vitamin B₆, Vitamin B₁₂, Folsäure, Niacin, Biotin und Pantothensäure. Typisch beträgt der Anteil an Vitaminen etwa 0,1 bis etwa 0,3 Gewichtsprozent.

Die zusätzlich vorhandene Menge an dem oder den Vitaminen kann in den erfindungsgemässen Mineralstoffen genau wie bei den omega-3-Fettsäuren anhand eines Vergleichsversuchs festgestellt werden, bei dem der Gesamtgehalt an diesen Mineralstoffen mit dem Gesamtgehalt in einem herkömmlichen Fleischprodukt (ohne explizite Zugabe an Vitaminen) verglichen wird, das aus denselben Fleischsorten und -mengen und mittels desselben Herstellungsverfahrens erhalten wurde.

Besonders bevorzugt können die erfindungsgemässen Fleischprodukte weitere Zusätze von Ballaststoffen oder Mineralstoffen enthalten. Bei den Ballaststoffen handelt es sich beispielsweise um Oligofruktose oder Inulin, die in Mengen von typisch etwa 0,1 bis etwa 5 Gewichtsprozenten, bevorzugt etwa 0,5 bis etwa 3 Gewichtsprozenten bezogen auf das Fleischprodukt vorhanden sein können. Die Mineralstoffe können beispielsweise Calcium, Magnesium, Eisen, Zink, Jod u.ä. sein. Vorzugsweise werden die Mineralstoffe in einer Menge zugegeben, dass der jeweilige Gesamtgehalt pro Portion (z.B. etwa 100 g) gerade einer Tagesdosis entspricht. Für eine Ration von 100 g wären das beispielsweise etwa 600 bis 1000 mg Calcium, 200 bis 400 mg Magnesium, 10 bis 20 mg Eisen, 10 bis 20 mg Zink und 0,1 bis 0,2 mg Jod.

Beispiele für erfindungsgesässe Kategorien von Fleischwaren sind Kochwurstwaren, Brühwurstwaren, Rohwurstwaren, Kochpökelwaren und Fleischkonserven. Besondere Beispiele sind z.B. alle Arten von Würsten, Brät, Schinken, Eisbein, Pasteten, Brotaufstriche wie Leberwurst oder Mettwurst, Fleischkäse, Aufschnitt, Corned Beef, mariniertes oder gebeiztes Fleisch wie z.B. Pfeffer u.ä.

Die für ein erfindungsgemässes Fleischprodukt benötigten Zusätze können jeweils dieselben sein wie für ein analoges vorbekanntes Fleischprodukt. Beispiele für solche Zusätze sind Wasser, pflanzliche Fette (z.B. Sonnenblumenöl, Erdnussöl, Olivenöl), Aromastoffe, Mehl, Gewürze (z.B. Salz oder Nitritpökelsalz, Geschmacksverstärker) u.ä.

Die Herstellung der erfindungsgemässen Fleischwaren kann in Analogie zu den entsprechenden vorbekannten Fleischprodukten erfolgen, wobei jedoch zu einem beliebigen Zeitpunkt des Herstellungsprozesses die omega-3-Fettsäure und das oder die lebensmittelrechtlich zugelassenenen Vitamine zugegeben werden. Als Literatur für vorbekannte Herstellungsverfahren können z.B. das "Handbuch der Fleischwarenherstellung" 8. Auflage von Eberhard Lienhop, Verlag Günter Hempel, Braunschweig, 1974, sowie im speziellen auch das Lehrbuch "Technologie der Brühwurst" des Institutes für Technologie der deutschen Bundesanstalt für Fleischforschung von 1984 angegeben werden.

Da, wie oben angetönt, die omega-3-Fettsäuren empfindlich gegen Sauerstoff sind, geschieht die Zugabe vorteilhaft in einer Weise, dass die omega-3-Fettsäure(n) im fertigen Fleischprodukt möglichst nicht in Kontakt mit der Luft kommen.

Bei Fleischprodukten, die unter anderem eine intensive Zerkleinerung unter Beimischung von anderen, für das jeweilige Fleischprodukt erforderlichen Zusätzen erfahren, kann die Zugabe der omega-3-Fettsäure und des oder der Vitamine vorteilhaft gleichzeitig mit der Zugabe der übrigen Zusätze erfolgen, wobei die omega-3-Fettsäure und das oder die Vitamine in die Mischung eingearbeitet wird. Bei Würsten wird der Schutz der omega-3-Fettsäure vor der Luft durch das Einfüllen in eine Wursthülle weiter verbessert. Vorzugsweise geschehen die Arbeitsschritte ab der Zugabe der omega-3-Fettsäuren unter mindestens teilweisem Vakuum oder Schutzgas wie Stickstoff.

Im Folgenden wird die Herstellung von erfindungsgemässen Fleischprodukten beschrieben, die von einer intensiv zerkleinerten Fleischmasse, d.h. einem Brät, ausgehen. Insbesondere sind das z.B. Würste, Fleischkäse oder Fleischkonserven. Dieser allgemeine Verfahrensbeschrieb kann für alle erfindungsgemässen Brühwürste (Bratwurst, Cervelat, Wienerli, Frankfurterli, Würstchen, Lyoner, Fleischkäse, Charcuterie, Konserven usw.) gelten. Die genauen Verfahrensparameter der einzelnen Schritte (Brätherstellung, Füllen, Kochen, Räuchern) sind in der Regel analog zum jeweils vorbekannten Fleischprodukt, können aber unter Umständen von der Art der verwendeten Maschinen- und Anlagentypen abhängen. Die Optimierung der Verfahrensparameter stellen aber für den Fachmann kein grundsätzliches Problem dar.

### Herstellung des Bräts:

Das Fleisch (in der Regel Magerfleisch, z.B. Kalbfleisch, Rindfleisch, Schweinefleisch) wird vorgescheffelt und in einer geeigneten Maschine (z.B. einem Schneidmischer) vorgelegt. Dann werden unter Mischen die Vitamine und Zusatzstoffe wie Salz, Gewürze, technologische Hilfsstoffe (Phosphat, Ascorbinsäure) und erfindungsgemäss bevorzugt Vitamine zugegeben. Die Mischung wird unter Eiszugabe bei wenigen Grad über Null auf "Bindung" gekuttert. Dann werden vorgescheffelte Fettkomponenten (Wurstspeck, Kinnbacken, Pflanzenöl, usw.) und die omega-3-Fettsäuren und das oder die Vitamine zugegeben und unter Zugabe von weiterem Eis untergemischt, wobei die Temperatur ebenfalls wenige Grade über Null gehalten wird. Vorzugsweise werden zu der Mischung jetzt noch Ballaststoffe zugegeben und daruntergemischt. Die Mischung wird intensiv emulgiert, wobei die Temperatur auf etwa über 10°C ansteigen gelassen wird. Gegen Ende des Emulgierprozesses wird die Mischung evakuiert, um Sauerstoff zu entfernen. Die Belüftung am Schluss erfolgt vorteilhaft mit Stickstoff. Die gesamte Dauer der Brätherstellung dauert in der Regel einige Minuten.

### Abfüllung:

Das Brät wird zur Herstellung von Würsten in Naturdärme oder Kunstdärme gefüllt; zur Herstellung von Fleischkonserven, u.ä. können sonstige übliche Behältnisse aus Plastik, Metall (z.B. Dosen) verwendet werden.

### Kochen/Räuchern (fakultativ):

Sofern die gefüllten Brätprodukte nicht in rohem Zustand vertrieben werden die gefüllten Produkte in einer üblichen Rauch-Kochanlage geräuchert (goldgelbe Farbe) oder/und gegart (Kerntemperatur: >+70°C). Anschliessend wird in einem definierten Kühlmedium (Kaltwassertauchbecken, Intensivkühlanlage, Luftkühlung) auf eine Kerntemperatur von typisch unter 4°C abgekühlt.

Im Falle von Fleischprodukten, bei denen das rohe Fleisch keine intensive Zerkleinerung und Mischung durchläuft (z.B. Kochpökelwaren wie Schinken, Eisbein), kann die Zugabe der omega-3-Fettsäure und des oder der Vitamine durch Marinieren, Beizen oder vorteilhaft durch Injektion einer Lake, die diese Fettsäuren und die Vitamine enthält, mit anschliessender Massage des Fleisches erfolgen, so dass die omega-3-Fettsäure und die Vitamine mindestens teilweise in das Innere des Fleisches eindringt. Die Injektion einer Salzlake, die omega-3-Fettsäure und Vitamine enthält, ist die bevorzugte Zugabemethode im Falle von Schinken wie etwa Kochschinken.

Um einen allfälligen Verlust an omega-3-Fettsäure während des Herstellungsprozesse zu kompensieren kann die omega-3-Fettsäure auch in einem Überschuss (z.B. etwa das Vierfache) zugegeben werden.

In allen Fällen kann ein Schutz vor Luftzutritt durch Abpacken der erfindungsgemässen Fleischprodukte in gasdichte Verpackungen, z.B. Kunststofffolien, -beutel o.ä., vorzugsweise unter Vakuum, erreicht werden. Vorzugsweise wird auch die mikrobielle Aktivität in den erfindungsgemässen Fleischprodukten verringert, z.B. durch Brühen, Sieden oder Pasteurisieren.

Die erfindungsgemässen Fleischprodukte sind auch nach mehrwöchiger Lagerung geschmacklich einwandfrei.

Die folgende Tabelle 1 gibt eine Überblick über typische Zusammensetzungen von einigen erfindungsgemässen Fleischprodukten.

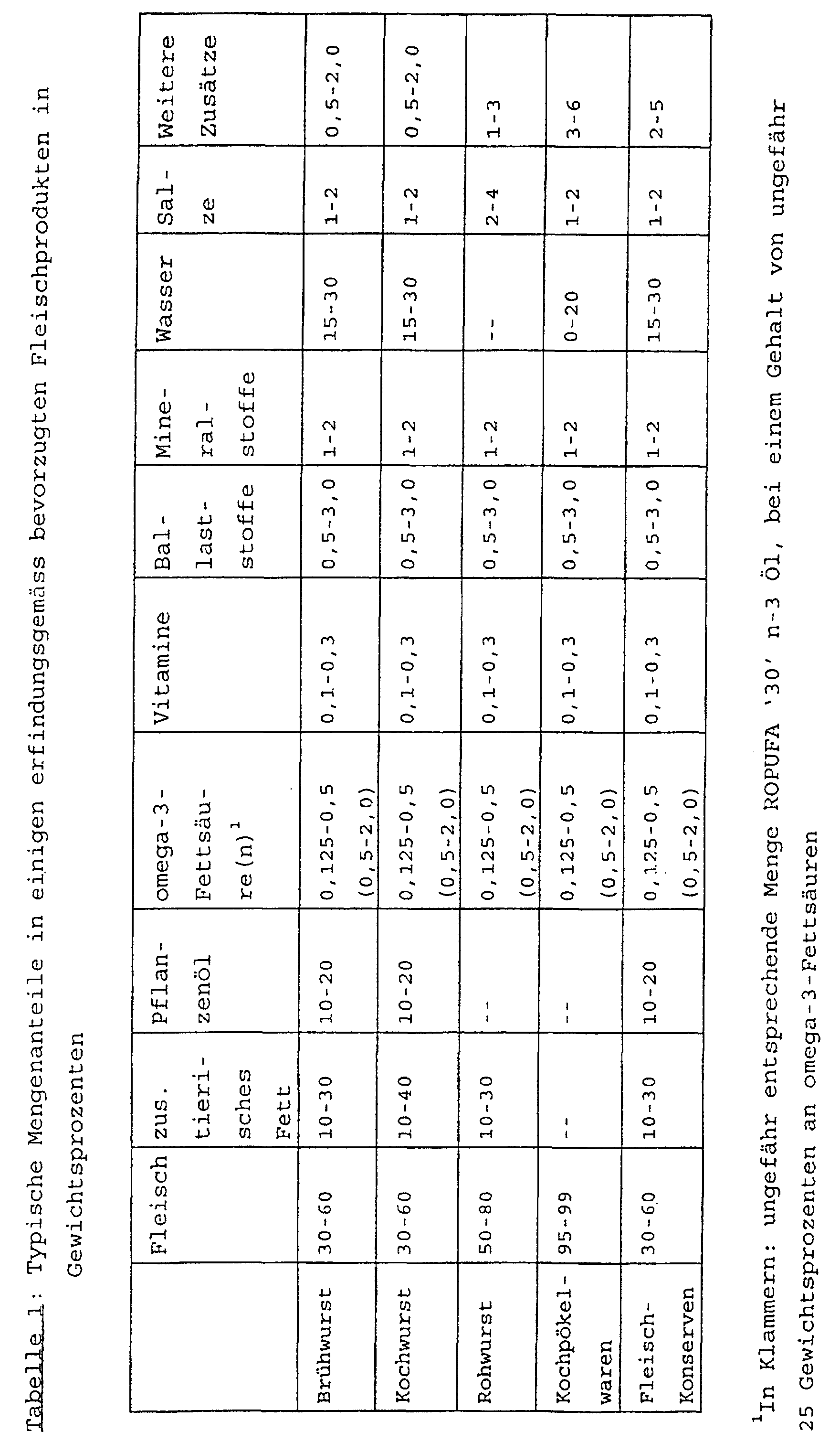

Gegenstand der Erfindung sind auch Nahrungsmittel, die die erfindungsgemässen Fleischprodukte enthalten. Bei solchen Nahrungsmitteln kann es sich um Fertiggerichte handeln, die in einer Menge von typisch einer bis zwei Portionen abgepackt sind und zur Zubereitung nur ein Erwärmen, wahlweise unter Würzen, benötigen. Solche Fertiggerichte können die erfindungsgemässen Fleischprodukte (z.B. ein Gulasch, Geschnetzeltes, Pfeffer) in Kombination mit vorgekochten Teigwaren, Reis, Kartoffeln, Gemüsen u.ä. enthalten.

Als erfindungsgemässe Nahrungsmittel gelten auch Lebensmittel, die ein erfindungsgemässes Fleischprodukt in einen Teig eingefüllt enthalten. Beispielsweise können das fleischhaltige Teigwaren wie Ravioli, Canelloni oder Wurstweggen, Schinkengipfeli, Vol-au-Vents o.ä. sein. Als Nahrungsmittel gelten auch Suppen oder Saucen, die ein erfindungsgemässes Fleischprodukt enthalten. Beispiele hierfür sind Fleischsuppen oder Sauce bolognaise.

Der Gehalt an Fleischprodukten kann in den erfindungsgemässen Nahrungsmitteln von etwa 5 bis etwa 70 Gewichtsprozenten gehen, wobei die Mengen vorteilhaft analog zu entsprechenden vorbekannten Nahrungsmittel gewählt werden.

Die Erfindung wird nun durch die nachfolgenden Beispiele veranschaulicht. Diese sollen nur zur Illustration und nicht zur Einschränkung des Schutzumfangs herangezogen werden.

### BEISPIELE

Sofern nicht anders angegeben beziehen sich Prozente und Teile auf die Gewichte.

In den Beispielen wurden die omega-3-Fettsäure in Form des von der Firma Roche vertriebenen Öls "ROPUFA '30' n-3 EPA Oil" (Produktcode: 0424676, stabilisiert mit α-Tocopherol/Ascorbylpalmitat) eingesetzt. Dieses weist typisch unter anderem die folgende Zusammensetzung auf: EPA-Gehalt mindestens 15%, DHA-Gehalt mindestens 9%; das verwendete Lot-Nr. M811062 wies zum Zeitpunkt der Herstellung 17,6% DHA und 12,2% EPA auf. Es wurde eine Vitaminmischung (994 EU, H 30779) verwendet, die u.a. die folgende Zusammensetzung aufwies: Ascorbinsäure 56,2 Teile, Nicotinsäureamid 16,9 Teile, d,l-alpha-Tocopherolacetat 14,0 Teile, Calcium-D-panthothenat 6,2 Teile, Vitamin-B₆-hydrochlorid 2,3 Teile, Vitamin B₁-Nitrat 1,6 Teile, Vitamin B₂ 1,5 Teile, Vitamin B₁₂ 0,9 Teile. Diese Vitaminmischung ist mit Maltodextrin als Träger vermischt.

### Beispiel 1: Brät

In einem Schneidmischer (Grämer&Grebe) wurden 140 kg Kalbs-Wurstfleisch und 50 kg Schweine-Wurstfleisch (auf eine Grösse von 3 mm vorgescheffelt), 1 kg ROPUFA '30' n-3 Öl (enthält omega-3-Fettsäuren), 15 kg Eis, 9 kg Kochsalz (jodhaltig), 1 kg Vitaminmischung (H 30779) und 10 kg Gewürze vorgelegt. Bei Stufe II für das Schneidemesser und die Rührschüssel wurden 60 kg Schweine-Kinnbackenspeck und 60 kg Schweine-Wurstspeck (auf eine Grösse von 3 mm vorgescheffelt) bei 6°C zugegeben und kurz gemischt. Bei einer Temperatur von 11°C wurden zusätzliche 80 kg Eis zugegeben., worauf auf Stufe III für das Schneidemesser und Stufe I für die Rührschüssel während einigen Minuten emulgiert wurde. Während dieser Zeit sank die Temperatur zunächst auf 6°C (zu diesem Zeitpunkt wurde der Schneidmischer evakuiert) und stieg gegen Schluss wieder auf etwa 12 bis 15°C. wurde. Bei Erreichen von etwa 9°C wurde der Schneidmischer mit Stickstoff belüftet. Das Brät wurde bis zum Auftreten einer goldgelben Rauchfarbe geräuchert und anschliessend gekocht (Kerntemperatur am Schluss 70°C oder höher). Das fertige Brät wurde auf 4°C abgekühlt und verpackt.

### Beispiel 2: Kochschinken

Aus 100 kg Wasser, 20 kg Nitritpökelsalz, 9 kg ROPUFA '30' n-3 Öl (enthält omega-3-Fettsäure), 2,5 kg Vitaminmischung (H 30779) und 4 kg Gewürzen und Hilfsstoffen wurde in einem Lakemischer durch Dispergierung eine Salzlake hergestellt. 15 kg dieser Lake wurden 100 kg Rohfleisch (Vorder- oder Hinterschinken vom Schwein) mittels eines Pökelinjektors eingespritzt und die Lake durch Intervallmassage im Schinken verteilt. Der Schinken wurde eingeformt und auf eine Kerntemperatur grösser als 68°C gekocht. Nach Auskühlen bei 3°C und Anräuchern wurde der Schinken in Folie abgepackt und einer Nachpasteurisation unterzogen.

### Beispiel 3: Bratwurst

Das Brät wurde ähnlich wie in Beispiel 1 hergestellt, mit der folgenden Rezeptur:

| | Menge (kg) | Anteil (%) | Bestandteile (%) | | |
|---|---|---|---|---|---|
| | | | Wasser | Fett | Eiweiss |
| KALBWURSTFLEISCH | 140 | 30,50 | 73,00 | 8,00 | 19,00 |
| SCHWEINWURSTFLEISCH | 50 | 10,89 | 64,23 | 14,46 | 17,71 |
| KALBSKOPF GEBLITZT | 40 | 8,71 | 76,80 | 6,00 | 15,80 |
| SCHWEIN-KINNBACKENSPECK | 65 | 14,16 | 35,30 | 54,10 | 9,70 |
| SCHWEINWURSTSPECK | 60 | 13,07 | 23,00 | 69,62 | 7,00 |
| EIS | 80 | 17,43 | 100,00 | 0,00 | 0,00 |
| GEWÜRZE / HILFSSTOFFE | 10 | 2,18 | 10,00 | 5,00 | 0,00 |
| KOCHSALZ JODHALTIG | 9 | 1,96 | 5,00 | 0,00 | 0,00 |
| VITAMINMISCHUNG (994 EU) H30779 | 1 | 0,22 | 0,00 | 0,00 | 0,00 |
| ROPUFA '30'n-3 DHA Oil | 4 | 0,87 | 0,00 | 100,00 | 0,00 |

Das erhaltene Brät wurde in Naturdärme abgefüllt, und die erhaltenen Würste gegart.

### Beispiel 4: Wiener Würstchen

Das Brät wurde ähnlich wie in Beispiel 1 hergestellt, mit der folgenden Rezeptur:

| | Menge (kg) | Anteil (%) | Bestandteile (%) | | |
|---|---|---|---|---|---|
| | | | Wasser | Fett | Eiweiss |
| RINDSWURSTFLEISCH GESALZEN | 90 | 22,11 | 67,69 | 8,91 | 19,39 |
| SCHWEINSWURSTFLEISCH GESALZEN | 90 | 22,11 | 64,23 | 14,46 | 17,71 |
| SCHWEIN-KINNBACKENSPECK GESALZEN | 60 | 14,74 | 35,30 | 54,10 | 9,70 |
| SCHWEINWURSTSPECK GESALZEN | 60 | 14,74 | 23,56 | 68,94 | 7,05 |
| SCHWARTENBLOCK GEBLITZT | 20 | 4,91 | 69,86 | 12,46 | 14,90 |
| DEFEKTE WURSTWAREN | 10 | 2,46 | 62,00 | 20,00 | 15,00 |
| EIS | 68 | 16,70 | 100,00 | 0,00 | 0,00 |
| GEWÜRZE / HILFSSTOFFE | 4,1 | 1,01 | 10,00 | 5,00 | 0,00 |
| VITAMINMISCHUNG (994 EU) H30779 | 1 | 0,25 | 0,00 | 0,00 | 0,00 |
| ROPUFA '30'n-3 DHA Oil | 4 | 0,98 | 0,00 | 100,00 | 0,00 |

### Beispiel 5: Cervelat

Das Brät wurde ähnlich wie in Beispiel 1 hergestellt, mit der folgenden Rezeptur:

| | Menge (kg) | Anteil (%) | Bestandteile (%) | | |
|---|---|---|---|---|---|
| | | | Wasser | Fett | Eiweiss |
| RINDSWURSTFLEISCH GESALZEN | 80 | 20,00 | 73,00 | 8,00 | 19,00 |
| SCHWEINSWURSTFLEISCH GESALZEN | 85 | 21,25 | 64,23 | 14,46 | 17,71 |
| SCHWEINBLASSEN GESALZEN | 30 | 7,50 | 76,80 | 6,00 | 15,80 |
| SCHWEINWURSTSPECK GESALZEN | 90 | 22,50 | 35,30 | 54,10 | 9,70 |
| SCHWARTENBLOCK GEBLITZT | 25 | 6,25 | 23,00 | 69,62 | 7,00 |
| EIS | 75 | 18,75 | 100,00 | 0,00 | 0,00 |
| GEWÜRZE / HILFSSTOFFE | 9,940 | 2,49 | 10,00 | 5,00 | 0,00 |
| VITAMINMISCHUNG (994 EU) H30779 | 1 | 0,25 | 5,00 | 0,00 | 0,00 |
| ROPUFA '30'n-3 DHA Oil | 4 | 1,00 | 0,00 | 0,00 | 0,00 |

Das erhaltene Brät wurde in Kunstdärme abgefüllt und die erhaltenen Würste geräuchert und gekocht.

### Beispiel 7: Lyoner Wurst

Das Brät wurde ähnlich wie in Beispiel 1 hergestellt, mit der folgenden Rezeptur:

| | Menge (kg) | Anteil (%) | Bestandteile (%) | | |
|---|---|---|---|---|---|
| | | | Wasser | Fett | Eiweiss |
| RINDSWURSTFLEISCH GESALZEN | 80 | 20,00 | 73,00 | 8,00 | 19,00 |
| SCHWEINSWURSTFLEISCH GESALZEN | 85 | 21,25 | 64,23 | 14,46 | 17,71 |
| SCHWEINBLASSEN GESALZEN | 30 | 7,50 | 76,80 | 6,00 | 15,80 |
| SCHWEINWURSTSPECK GESALZEN | 90 | 22,50 | 35,30 | 54,10 | 9,70 |
| SCHWARTENBLOCK GEBLITZT | 25 | 6,25 | 23,00 | 69,62 | 7,00 |
| EIS | 75 | 18,75 | 100,00 | 0,00 | 0,00 |
| GEWÜRZE / HILFSSTOFFE | 9,940 | 2,49 | 10,00 | 5,00 | 0,00 |
| VITAMINMISCHUNG (994 EU) H30779 | 1 | 0,25 | 5,00 | 0,00 | 0,00 |
| ROPUFA '30'n-3 DHA Oil | 4 | 1,00 | 0,00 | 0,00 | 0,00 |

Das erhaltene Brät wurde in Kunstdärme abgefüllt, und die erhaltenen Würste geräuchert.

## Patentansprüche

1. Für den Verzehr geeignete, Fleisch enthaltende Fleischprodukte enthaltend einen Gesamtgehalt an einer omega-3-Fettsäure, der höher ist als der von dem Fleisch selber stammende Gehalt an dieser omega-3-Fettsäure, **dadurch gekennzeichnet, dass** sie
a) eines oder mehrere zusätzliche lebensmittelrechtlich zugelassene, aus Vitamin B₁, Vitamin B₂, Vitamin B₆, Vitamin B₁₂, Folsäure, Niacin, Biotin und Pantothensäure ausgewählte Vitamine in Mengen von 0,1 bis 0,3 Gewichtsprozenten, bezogen auf das Fleischprodukt, und
b) Ballaststoffe enthalten.

2. Fleischprodukte nach Anspruch 1 **dadurch gekennzeichnet, dass** die Differenz zwischen Gesamtgehalt der omega-3-Fettsäure und vom Fleisch selber stammendem Gehalt der omega-3-Fettsäure mindestens 0,1 Gewichtsprozente des Fleischproduktes beträgt.

3. Fleischprodukte nach Anspruch 1 oder 2 **dadurch gekennzeichnet, dass** die omega-3-Fettsäure die all-cis-Eicosa-5,8,11,14,17-pentaensäure oder die all-cis-Docosa-4,7,10,13,16,19-hexaensäure ist.

4. Fleischprodukte nach einem der Ansprüche 1 bis 3, in Form einer Wurst oder eines Brätes.

5. Fleischprodukte nach einem der Ansprüche 1 bis 3, in Form eines Kochschinkens.

6. Fleischprodukte nach einem der Ansprüche 1 bis 5 **dadurch gekennzeichnet, dass** sie ein Antioxidans enthalten.

7. Fleischprodukte nach Anspruch 6 **dadurch gekennzeichnet, dass** das Antioxidans aus alpha-Tocopherol, Ascorbinsäure, den Estern der Ascorbinsäure und Mischungen daraus ausgewählt ist.

8. Fleischprodukte nach Anspruch 6 oder 7 **dadurch gekennzeichnet, dass** das Antioxidans in einer Menge von 0,1 bis 2 Gewichtsprozenten bezogen auf die Gesamtmenge der omega-3-Fettsäuren vorhanden ist.

9. Fleischprodukte nach Anspruch 1, wobei die Ballaststoffe aus Oligofruktose und Inulin ausgewählt sind.

10. Fleischprodukte nach Anspruch 1 oder 9 **dadurch gekennzeichnet, dass** die Menge der Ballaststoffe 0,5 bis 3 Gewichtsprozente bezogen auf das Fleischprodukt beträgt.

11. Fleischprodukte nach einem der Ansprüche 1 bis 10 **dadurch gekennzeichnet, dass** sie 600 bis 1000 mg Calcium, 200 bis 400 mg Magnesium, 10 bis 20 mg Eisen, 10 bis 20 mg Zink und 0,1 bis 0,2 mg Jod pro 100 g Fleischprodukt aufweisen.

12. Nahrungsmittel enthaltend ein Fleischprodukt nach Anspruch 1.

13. Verwendung einer Kombination von omega-3-Fettsäure; lebensmittelrechtlich zugelassenem, aus Vitamin B₁, Vitamin B₂, Vitamin B₆, Vitamin B₁₂, Folsäure, Niacin, Biotin und Pantothensäure ausgewähltem Vitamin und Ballaststoff als Zusatzstoff in den Fleischprodukten nach einem der Ansprüche 1 bis 11.

## Claims

1. An edible meat-containing meat product comprising a total content of an omega-3 fatty acid which is higher than the content of this omega-3 fatty acid originating from the meat itself, **characterized in that** it contains
a) one or more vitamins permitted by food law and selected from vitamin B₁, vitamin B₂, vitamin B₆, vitamin B₁₂, folic acid, niacin, biotin and pantothenic acid, in an amount of 0.1 to 0.3 percent by weight based on the meat product, and
b) bulkage.

2. A meat product according to claim 1, **characterized in that** the difference between total content of the omega-3 fatty acid and the omega-3 fatty acid content originating from the meat itself is at least 0.1 percent by weight based on the meat product.

3. Meat product according to claim 1 or 2, **characterized in that** the omega-3 fatty acid is all-cis-eicosa-5,8,11,14,17-pentaenoic acid or all-cis-docosa-4,7,10,13,16,19-hexaenoic acid.

4. A meat product according to one of claims 1 to 3, in the form of a sausage or a meat dough.

5. A meat product according to one of claims 1 to 3, in the form of a cooked ham.

6. A meat product according to one of claims 1 to 5, **characterized in that** in contains an antioxidant.

7. A meat product according to claim 6, **characterized in that** the antioxidant is selected from alpha-tocopherol, ascorbic acid, the esters of ascorbic acid and the mixtures thereof.

8. A meat product according to claim 6 or 7, **characterized in that** the antioxidant is present in an amount of 0.1 to 2 percent by weight based on the total amount of the omega-3 fatty acids.

9. A meat product according to claim 1, wherein the bulkage is selected from oligofructose and inulin.

10. A meat product according to claim 1 or 9, **characterized in that** the amount of bulkage is 0.5 to 3 percent by weight based on the meat product.

11. A meat product according to one of claims 1 to 10, **characterized in that** it contains 600 to 1000 mg calcium, 200 to 400 mg magnesium, 10 to 20 mg iron, 10 to 20 mg zinc and 0.1 to 0.2 mg iodine per 100 g of meat product.

12. A foodstuff comprising a meat product according to claim 1.

13. Use of a combination of omega-3 fatty acid; of vitamin permitted by food law and selected from vitamin B₁, vitamin B₂, vitamin B₆, vitamin B₁₂, folic acid, niacin, biotin and pantothenic acid; and of bulkage, as an additive in a meat product according to one of claims 1 to 11.

## Revendications

1. Produits carnés propres à la consommation et contenant de la viande, dont la teneur totale en un acide gras 3-oméga est supérieure à la fraction de cet acide gras 3-oméga qui provient de la viande elle-même, **caractérisés en ce qu'**ils contiennent
a) une ou plusieurs vitamines additionnelles admises selon les dispositions légales concernant les denrées alimentaires et choisies parmi la vitamine B₁, la vitamine B₂, la vitamine B₆, la vitamine B₁₂, l'acide folique, la niacine, la biotine et l'acide pantothénique en des quantités allant de 0,1 à 0,3 % en poids par rapport au produit carné et
b) des substances de charge.

2. Produits carnés selon la revendication 1, **caractérisés en ce que** la différence entre la teneur totale en acide gras 3-oméga et la fraction de l'acide gras 3-oméga qui provient de la viande elle-même est d'au moins 0,1 % en poids du produit carné.

3. Produits carnés selon la revendication 1 ou 2, **caractérisé en ce que** l'acide gras 3-oméga est l'acide all-cis-5,8,11,14,17-éicosapentaénoïque ou l'acide all-cis-4,7,10,13,16,19-docosahexaénoïque.

4. Produits carnés selon l'une quelconque des revendications 1 à 3 sous forme de saucisse ou de pâte de viande.

5. Produits carnés selon l'une quelconque des revendications 1 à 3 sous forme de jambon cuit.

6. Produits carnés selon l'une quelconque des revendications 1 à 5, **caractérisés en ce qu'**ils contiennent un antioxydant.

7. Produits carnés selon la revendication 6, **caractérisé en ce que** l'antioxydant est choisi parmi l'alpha-tocophérol, l'acide ascorbique, les esters de l'acide ascorbique et leurs mélanges.

8. Produits carnés selon la revendication 6 ou 7, **caractérisé en ce que** l'antioxydant est présent en une quantité de 0,1 à 2 % en poids par rapport à la teneur totale en acide gras 3-oméga.

9. Produits carnés selon la revendication 1, **caractérisé en ce que** les substances de charge sont choisies parmi l'oligofructose et l'inuline.

10. Produits carnés selon la revendication 1 ou 9, **caractérisé en ce que** la quantité des substances de charge est de 0,5 à 3 % en poids par rapport au produit carné.

11. Produits carnés selon l'une quelconque des revendications 1 à 10, **caractérisé en ce qu'**ils contiennent de 600 à 1000 mg de calcium, de 200 à 400 mg de magnésium, de 10 à 20 mg de fer, de 10 à 20 mg de zinc et de 0,1 à 0,2 mg d'iode par 100 g de produit carné.

12. Aliment contenant un produit carné selon la revendication 1.

13. Utilisation d'une association d'acide gras 3-oméga, d'une vitamine admise selon les dispositions légales concernant les denrées alimentaires et choisie parmi la vitamine B₁, la vitamine B₂, la vitamine B₆, la vitamine B₁₂, l'acide folique, la niacine, la biotine et l'acide pantothénique et d'une substance de charge en tant qu'adjonction à des produits carnés selon l'une quelconque des revendications 1 à 11.
